# EUROPÄISCHE PATENTANMELDUNG

(11) **EP 4 343 183 A1**
(43) Veröffentlichungstag der Anmeldung: **27.03.2024**
(21) Anmeldenummer: 22196734.2
(22) Anmeldetag: 20.09.2022
(51) Int. Cl.: F16K 11/044, F16K 1/48, F16K 47/00, F16K 31/04, F16K 27/02, F24D 19/10

(54) **DICHTSYSTEM FÜR UMSCHALTBARE FLUIDDURCHSTRÖMTE WASSERVENTILE**

(71) Anmelder: Johnson Electric Germany GmbH & Co. KG, 01257 Dresden (DE)
(72) Erfinder: Pilz, Henry, 01589 Riesa (DE); Knäbel, Heiko, 01279 Dresden (DE); Gaßmann, Jörg, 01937 Dresden (DE)
(74) Vertreter: Drechsler, Gottfried

(57) **Zusammenfassung**

Die Erfindung betrifft ein Dichtsystem für umschaltbare fluiddurchströmte Wasserventile zur Verwendung in Heizgeräten und Wasserboilern.

Aufgabe ist es ein Dichtsystem für Wasserventile zu schaffen, welches konstruktiv einfach aufgebaut ist, aus wenigen Einzelteilen besteht, sich schnell automatisiert montieren lässt, einen geringen Strömungswiderstand im geöffneten Zustand besitzt, keine Leckage aufweist, und ein Rückspringen eines Dichtkörpers im jeweiligen Anschlag zuverlässig zu verhindert.

Um ein Rückspringen oder eine oszillierende Bewegung eines Dichtkörpers 8 beim Anschlag an eine Dichtkante oder Dichtfläche 21 in einem Dichtsystem für umschaltbare fluiddurchströmte Wasserventile 1, bestehend aus einem Ventilkörper 5, daran angeflanschter Kartusche 2 und einem angeordneten Antrieb und Verstellung über eine Ventilstellstange 4 mit einem oder mehreren an oder auf einem Ventilgrundkörper 7 angeordneten Dichtkörper(n) 8 zuverlässig zu verhindern, wird erfindungsgemäß innerhalb der Kraftübertragungsstrecke mindestens ein Kraftbegrenzungselement 9 mit einer definierten Dämpfungswirkung bzw. eine definierte Vorspannung ausübenden Wirkung angeordnet. Dabei umschließt je eine Dichtflächen/Dichtkante 21 des Ventilkörpers 5 einen Dichtkörper 8 in geschlossenem Zustand.

Die Erfindung ist insbesondere anwendbar in Umschaltventilen für die Einspeisung erwärmten Wassers in verschiedene Heizkreisläufe für Heizgeräte.

## Beschreibung

Die Erfindung betrifft ein Dichtsystem für umschaltbare fluiddurchströmte Wasserventile zur Verwendung in Heizgeräten und Wasserboilern insbesondere für Dreiwegewasserventile.

Zum Beispiel bei Hauhaltheizgeräten oder Wasserboilern, insbesondere im Bereich von gasgefeuerten Thermen sind eine Vielzahl von verschiedenen fluiddurchströmten Ventilarten bekannt, welche den Wasserfluss für Wasserkreise unterbrechen oder bei Bedarf umsteuern. In der Regel sind die Ventile vollständig offen oder vollständig geschlossen und werden durch Schrittmotoren, welche eine Linearbewegung erzeugen, betätigt. Es kommen also bevorzugt elektromechanisch betätigte Zweiwegeventile oder Dreiwegeventile zum Einsatz. Diese Ventile müssen so konstruiert sein, dass in ihnen kein wesentlicher Druckabfall während des Wasserflusses erfolgt und dass Leckagen innerhalb der Wasserkreise über den gesamten Temperaturbereich in dem sie betrieben werden, im Ventilbereich zuverlässig ausgeschlossen werden können.

Schrittmotoren mit Linearbewegung, welche eine genau definierte Schrittweite ausführen arbeiten nach dem Prinzip eines Klauenpolmotors. Fährt der Motor in einen Endanschlag wird auf Basis der elastischen Eigenschaften des Anschlags und des Linearschrittmotors eine Kraft entsprechend der Federrate des Systems aufgebaut. Sobald der Linearschrittmotor seine Kraftgrenze erreicht, welche jeweils an die magnetischen Eigenschaften des Systems gekoppelt ist, erfolgt ein unkontrolliertes Hin- und Herspringen des Rotors in nicht definierbare Schrittmuster. Diese Schrittmuster führen zumeist dazu, dass der Rotor sich in eine opponierende Richtung bewegt. Das führt wiederum im Endanschlagsystem aufgrund dessen Federrate zu einem Kraftverlust, der umso größer ist, je größer die Federrate des Systems ist. Nachteilig ist die harte und direkte Kopplung zwischen Motor und dem gekoppelten Ventilsystem, wobei die jeweils eingesetzte Dichtung den Hauptanteil der Steifigkeit des gesamten Systems festlegt und dadurch nur sehr schwer optimal eingestellt werden kann. Das führt bei der Auslegung des gesamten Systems dazu, dass der Motor eine zusätzliche Kraftreserve haben muss um das Rückspringen weitgehend zu vermeiden und die dadurch entstehenden Kraftverluste kompensieren zu können. Daraus folgt eine Überdimensionierung der bislang eingesetzten Linearschrittmotoren. Insgesamt erfolgt hierbei eine unnötig größere mechanische Belastung, sowohl des Ventilsystems als auch des jeweils zugehörigen Linearschrittmotors und insbesondere der Dichtkörper.

In der DE 20 2011 004 433 U1 ist ein leckagearmes Mischventil nach dem Dreiwegeprinzip mit einem zylindrischen Ventilverschluss beschrieben, welcher in einer Buchse linear beweglich geführt ist. Dabei ist der zylindrische Ventilköper in einer Mischkammer so angeordnet, dass dieser positionsabhängig unterschiedliche Anteile des Querschnitts von zwei Zuleitungen sperrt oder öffnet. Der Ventilschieber ist aus Edelstahl gefertigt und der Ventilkörper ist formschlüssig in einer Buchse aus einem Kohle-Graphit-Material geführt. Diese Ausführung ist kostenintensiv und nur schwer automatisch in großen Stückzahlen zu fertigen, da es hier auf eine genaue Passung der Ventileinzelteile zueinander und einen präzisen Sitz des Ventilschiebers ankommt.

In der DE 697 18 317 T2 ist zwar ein etwas sphärischer ausgebildeter Dichtkörper beschrieben, der eine verbesserte Ventilanordnung für Heizsysteme und Wasserheizgeräte mit einer höheren Leckagesicherheit bieten soll. Als Dichtkörper ist hier eine Art Dichtball aus einem zylindrischen Metallkörper beschrieben, der wiederum aber in zylindrische Dichtflächen verschoben werden muss. Zur Verhinderung der Leckage ist ein Seitenring (dieser wirkt als eigentlicher Dichtring) im Ventilkörper angeordnet, welcher jeweils radial zusammengedrückt werden muss, damit dieser für die Dichtheit sorgen kann. Durch diese Konstruktion sollen auch eventuelle Verunreinigungen oder Ablagerungen im Inneren des Ventilkörpers vermieden werden bzw. keinen Einfluss auf die Dichtheit des Ventils haben können. Nachteilig bei dieser Lösung ist ein relativ langer Stellweg für den Dichtkörper, da dieser ein ganzes Stück in die zylindrischen Dichtflächen der Ventilsitze so weit hinein verschoben werden muss bis der mittige Seitenring (Dichtring) seine Wirkung entfalten kann. Des Weiteren ist diese Lösung gekennzeichnet durch die Verwendung von teuren Materialien und die relativ aufwändige Herstellung des Dichtkörpers, d.h. schlechte automatisierbare Fertigung.

Aus der DE 10 2012 219 745 A1 ist ein elektromechanisch betriebenes Dreiwegeventil mit zwei Ventilsitzen bekannt, bei dem eine einzige Ventildichtung angeordnet ist, welche jeweils gegen flächig minimierte Ventilsitze gefahren werden kann und dann diese entsprechend abdichtet. Die Dichtflächen des Ventilskörpers sind dabei so abgeschrägt ausgeführt, dass der Dichtkörper flächig an diesen anliegt. Der Ventilgrundkörper ist in seinem Durchmesser kleiner als der Innendurchmesser des Ventilkörpers. Das hat den Vorteil, dass nur die jeweils an die Ventilflächen anliegenden Bereiche des Dichtkörpers beansprucht werden. Der Dichtkörper ist axial an zwei gegenüber liegenden Stellen im Inneren des Ventilkörpers 5 geführt, damit er sich nicht im Inneren des Ventilkörpers verkanten kann oder außermittig, d. h. schräg am jeweils in Eingriff befindlichen Ventilsitz anliegen kann. Dadurch vergrößert sich aber der Strömungswiderstand auf das durchfließende Fluid. Nachteilig ist auch, dass eventuelle Verformungen des Dichtkörpers, z. B. wenn der Dichtkörper sehr lange auf einer Seite gegen einen der beiden Ventilsitze gedrückt worden ist, sich eventuell auf die Leckage in der Dichtstellung in der anderen Position auswirken können.

In der DE 100 44 898 A1 ist ein Ventil beschrieben, welches als Abgasrückführventil für Verbrennungsmotoren dient. Dabei ist zur Betätigung des Ventils ein elektromotorisch betätigbarer rotierender Schraubantrieb ausgeführt, welcher eine Spindelmutter bewegt. Bei einem Fehler, d. h. bei einem Nichtansteuern des eingebauten Drehmagnets wird eine Rückstellfeder wirksam, welche den Drehmagneten wieder in seine Ausgangslage bewegt. Des Weiteren ist eine zweite Rückstellfeder angebracht. Allerdings sind die hier beschrieben Rückstellfedern im Inneren, also direkt im Motorengehäuse angeordnet. Eine oszillierende Bewegung wird dabei nicht ausgeglichen.

Die US 4,751,411 A beschreibt einen Linearschrittmotor mit einer Gewindewelle, wo eine axiale Bewegung für einen Ventilkörper ausgeführt wird. Am einen Ende der Gewindewelle ist eine Schraubenfeder angeordnet, welche durch die axiale Bewegung der Gewindewelle vorgespannt wird. Damit soll ein definiertes Spiel des Schraubenelements zwischen der Welle und dem Rotor des Linearschrittmotors verhindert werden, so dass der Antrieb mit einer hohen Genauigkeit betrieben werden kann.

Eine ähnliche technische Lösung ist in der JP 2002 039 313 A beschrieben, wo eine schwingende Betätigungswelle linear hin und her bewegt werden soll und mit einem Linearantrieb angetrieben ist. Dabei soll eine bestimmte Position sicher angesteuert werden können. Dies wird erreicht, indem eine Schraubenfeder in einem gesonderten Aufsatzteil, welches auf einer Art Kartusche befestigt ist, zwischen Betätigungswelle und Antriebswelle zwischengeordnet ist. Diese dient der Vorspannung der Betätigungswelle gegenüber der Antriebswelle. Zusätzlich ist ein Endanschlag in dem Aufsatzteil angeordnet, welches den Verstellweg der Antriebswelle begrenzt.

Auch in der GB 2 291 162 A ist eine Strömungssteuervorrichtung für ein Gasventil, welches mit einem linear betätigbaren Schrittmotor betrieben wird, beschrieben. Dabei wird mittels einer Schraubenfeder, wie bekannt eine Vorspannung auf die Ventilwelle erzeugt.

Solche Rückstellfedern, oder Schraubenfedern, welche eine definierte Vorspannung erzeugen oder zum Lösen aus einer bestimmten Anschlagposition dienen, sind auch in der WO2021156836 A1, der WO 2017060927 A2, der US 4501981 A, der JP 2016059170 A, der CN 103872840 B, der CN 206452198 U, der CN 204334281 U, der CN213185851 U und der EP2748487 B1 beschrieben.

Aufgabe der Erfindung ist es ein Dichtsystem für umschaltbare fluiddurchströmte Wasserventile zur Verwendung bevorzugt in Heizgeräten und Wasserboilern zu schaffen, welches konstruktiv einfach aufgebaut ist, aus sehr wenigen Einzelteilen mit geringstem Materialeinsatz besteht, sich schnell automatisiert montieren lässt, einen geringen Strömungswiderstand im geöffneten Zustand besitzt, keine Leckage in beiden Ventilstellungen aufweist, eine hohe Lebensdauer besitzt und ein Rückspringen oder Oszillieren eines Dichtkörpers im jeweiligen Anschlag zuverlässig verhindert.

Die Aufgabe wird erfindungsgemäß durch die Merkmale des ersten Patentanspruchs gelöst. Weitere zweckmäßige Ausgestaltungen der Erfindung sind Gegenstand der weiteren rückbezüglichen Unteransprüche. Um ein Rückspringen oder eine oszillierende Bewegung eines Dichtkörpers 8 beim Anschlag an eine Dichtkante oder Dichtfläche 21 in einem Dichtsystem für umschaltbare fluiddurchströmte Wasserventile 1, bestehend aus einem Ventilkörper 5, daran angeflanschter Kartusche 2 und einem daran angeordneten Antrieb mittels eines Linearmotors und einem in einem Ventilkörper 5 zwischen Dichtflächen/Dichtkanten 21 angeordneten Ventilgrundkörper 7, mit einem oder mehreren auf diesem angeordneten Dichtkörper(n) 8 und Verstellung über eine Ventilstellstange 4 zuverlässig zu verhindern, wird erfindungsgemäß innerhalb der Kraftübertragungsstrecke mindestens ein Kraftbegrenzungselement 9 mit einer definierten Dämpfungswirkung bzw. eine definierte Vorspannung ausübenden Wirkung angeordnet. Dabei umschließt je eine Dichtflächen/Dichtkante 21 des Ventilkörpers 5 einen Dichtkörper 8 in geschlossenem Zustand.

Zusätzlich sind die Dichtkörper 8, welche auf einem Dichtgrundkörper 7 aufgebracht sind, über diesen Dichtgrundkörper 7 geeignet schwimmend angeordnet oder schwimmend gefedert gelagert, indem die Ventilstellstange 4 in einer Ventilstellstangenbuchse 18 gelagert und geführt ist, welche mit einer speziell ausgebildeten inneren Querschnittsform ausgebildet ist, die als Durchführung dient. Dadurch wird auch bei außermittigem Schließvorgang und nicht genau zentrischer Anlage des/der Dichtkörper 8 an den sich jeweils im eingriff befindlichen Dichtflächen/Dichtkanten 21 eine zuverlässige Dichtheit im geschlossenen Ventilzustand ermöglicht. Diese Querschnittsform ist ballig ausgebildet

Von Vorteil ist es, wenn das Kraftbegrenzungselement 9 bei solch einem Dichtsystem für umschaltbare fluiddurchströmte Wasserventile 1 so ausgebildet ist, dass es beidseitig wirkt und/oder zudem noch so angeordnet ist, dass es vorteilhaft vorgespannt sich in Eingriff befindet. Es kann im Prinzip auch ohne Vorspannung eingebaut sein, allerdings sind dann die Stellwege erheblich länger.

Je nach Ausführung kann die Vorspannung in einem Bereich bis zur maximal geforderten Dichtkraft bei der Montage einmal eingestellt werden. In einer ersten Ausführung besteht das Kraftbegrenzungselement 9 aus vier am Umfang verteilt angeordneten Federelementen 9 bei diesem Dichtsystem für umschaltbare fluiddurchströmte Wasserventile 1. Diese sind zwischen Kartusche 2 und Linearmotor angeordnet. Dabei sind in der Kartusche vier um 90 Grad versetzt federumhüllte Gleitstifte in vier Gleitbuchsen angeordnet und geführt, wobei die Federelemente 9 unter definierter Vorspannung eingebaut sind. Dadurch kann ein Rückspringen des Ventilgrundkörpers 7 vermieden werden. Dabei ist es sinnvoll, wenn das Koppelelement 6 zwischen Linearmotor und der Ventilstellstange 4 kardanisch ausgeführt ist. Der Linearmotor ist also axial in gewissen Grenzen gegenüber der Kartusche 2 federbelastet angeordnet und verschieblich befestigt und kann so eine geringe axial oszillierende Bewegung ausführen, ohne das diese über die Koppelstelle und die Ventilstellstange 4 und den damit verbunden Ventilgrundkörper 7 und den/die darauf angeordneten Dichtkörper 8 übertragen werden können. Zusätzlich wird dabei ein Geräuscheintrag in die Wasserleitung weitgehend vermieden. Die Ventilstellstange 4 ist im Ventilgrundkörper 7, wie vorstehend bereits beschrieben, dabei schwimmend gelagert.

Es ist generell auch möglich beim Dichtsystem für umschaltbare fluiddurchströmte Wasserventile 1 das Kraftbegrenzungselement 9 zwischen Linearmotor und der Ventilstellstange 4 in oder an einem Koppelelement 6 anzuordnen. Hier sind als Federelemente 9 innerhalb des Koppelelements 6 beispielsweise je eine vorgespannte bogenförmig ausgebildete Blattfeder oder auch zwei kleine Schraubenfedern so angeordnet, dass diese gegen das in das Koppelelement 6 ragende oder mit diesem verbundenen entsprechend ausgebildeten Ende der Ventilstellstange 4 wirken und somit eine definierte Vorspannung über die Ventilstellstange 4, welche schwimmend im Ventilgrundkörper 7 gelagert und geführt ist, auf den/die Dichtelemente 8 wirken. Die oszillierende Bewegung wird dabei durch dieses Kraftbegrenzungselement 9 aufgenommen, so dass ein gleichmäßiger Dichtkörperanpressdruck in den beiden möglichen Schließstellungen des Ventilgrundkörpers 7 gewährleistet ist.

Gleichfalls kann beim Dichtsystem für umschaltbare fluiddurchströmte Wasserventile das Kraftbegrenzungselement 9 zwischen Kartusche 2 und Ventilkörper 5 angeordnet werden. Hier ist vorteilhaft, wenn als Kraftbegrenzungselement 9 ein ringförmiger doppelt federnder Elastomerring an der Verbindungsstelle zwischen beiden zwischengeordnet ist. Der Elastomerring ist dabei so dimensioniert, dass er eine ausreichende Vorspannung auf die Ventilstellstange 4 ausüben kann und eine oszillierende Bewegung des/der Dichtkörper(s) 8 verhindert. Der Vorteil dieser vorstehend beschrieben außerhalb des Ventilkörperinnenraumes angeordneten konstruktiven Lösungen besteht darin, dass die Rücksprungbewegungen hervorgerufen durch den Linearmotor nicht innerhalb des vom Wasser durchströmten Bereiches erfolgen, Geräuschübertragungen somit weitgehend nicht möglich sind und der/die Dichtkörper 8 sofort fest an den Dichtflächen/Dichtkanten 21 anliegen.

Prinzipiell kann beim Dichtsystem für umschaltbare fluiddurchströmte Wasserventile 1 das Kraftbegrenzungselement 9 auch in die Ventilstellstange 4 integriert ausgeführt sein. Die Ventilstellstange ist dabei in der Art einer doppelt federnden Teleskopstange ausgebildet.

In einer anderen Ausführung beim Dichtsystem für umschaltbare fluiddurchströmte Wasserventile 1 kann das Kraftbegrenzungselement 9 direkt an der Verbindungstelle zwischen Ventilstellstange 4 und Ventilgrundkörper 7 angeordnet sein. Hier ist es sinnvoll beispielsweise zwei vorgespannte sich diametral gegenüber stehend speziell ausgebildete nach beiden Richtungen federnde bogenförmige entsprechend vorgespannte Blattfedern anzuordnen.

Je nach konstruktiver Auslegung des Dichtsystems für umschaltbare fluiddurchströmte Wasserventile 1 kann das Federelement 9 als ein großer oder zwei sehr weiche Dichtkörper 8 ausgeführt werden, wobei die Stellstange dann definiert oder auch relativ langsam verfahren werden kann, so dass die Kraft nur langsam ansteigt. Das bedingt gegebenenfalls einen langen Verfahrweg und einen großen Bauraum.

Für bestimmte Ausführungsvarianten des Kraftbegrenzungselementes 9 und dessen Anordnung an einer bestimmten Stelle beim Dichtsystem für umschaltbare fluiddurchströmte Wasserventile 1 ist es vorteilhaft, wenn das Kraftbegrenzungselement 9 als ein oder mehrere separate(s) Bauteile ausgebildet ist/sind. So kann in einzelnen Ausführungen das Kraftbegrenzungselement 9 konstruktiv aus einer oder mehreren Schraubenfeder(n) 14, als Blattfedern, oder als ein Teil aus einem geeigneten Elastomerwerkstoff oder aus einem Kunstwerkstoff mit entsprechend federnden Eigenschaften und jeweils unter einer definierten Vorspannung eingebaut, ausgebildet sein.

Der Vorteil des erfindungsgemäßen Dichtsystems für umschaltbare fluiddurchströmte Wasserventile zur Verwendung in Heizgeräten und Wasserboilern besteht darin, dass die Federrate eines sich im Betrieb befindlichen beliebigen Linearmotorsystems auf ein erheblich niedrigeres Niveau reduziert werden kann, sodass die Kraftverluste, die mit den Schrittverlusten einhergehen vernachlässigbar klein sind und eine gleichmäßig gute Dichtheit in der Schließstellung gewährleistet ist.

Die Erfindung soll nachstehend an Hand der Figuren 1 bis 3 in zwei bevorzugten Ausführungsvarianten näher beschrieben werden.
- Fig. 1: zeigt eine Schnittdarstellung durch eine komplettes Wasserventil mit den unterschiedlicher Anordnungsmöglichkeiten von Kraftbegrenzungselementen/ Federelementen 9
- Fig. 2: zeigt eine Lösung mit einer Ausführung der Kraftbegrenzungselemente im Inneren des Ventilgrundkörpers 7 als Schraubenfedern 14 in einem Wasserventil 1
- Fig. 3: zeigt die Anordnung mehrerer Kraftbegrenzungselemente 9 zwischen einem Linearschrittmotor 3 und Kartusche 2 mittels vier verteilt angeordneten Gleitstiften

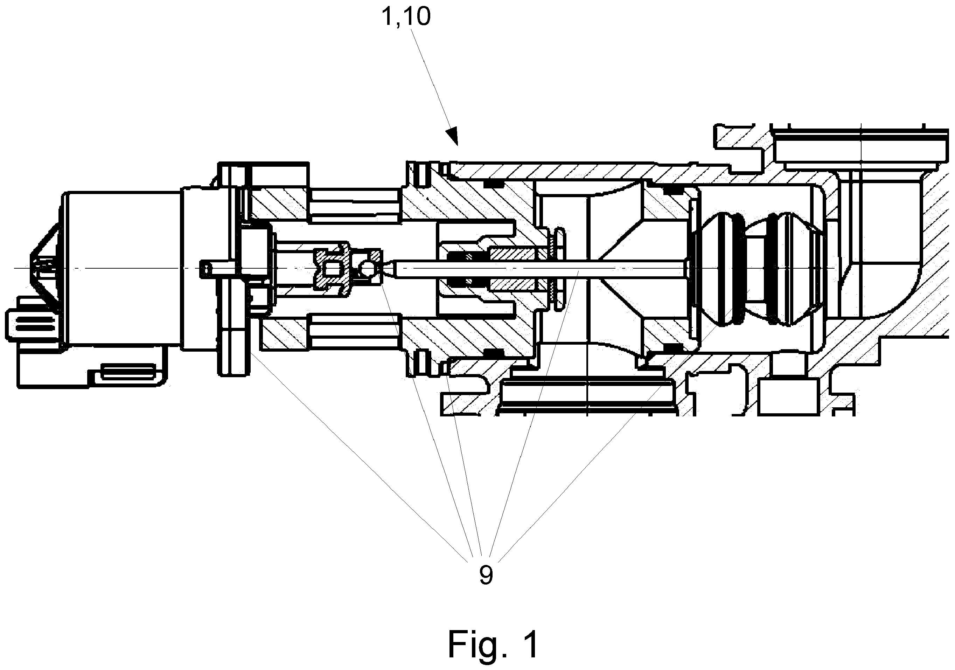

In der **Fig. 1** ist übersichtshalber eine Schnittdarstellung eines Dreiwegewasserventils 10 mit den gemäß der Erfindung möglichen Anordnungsvarianten eines oder mehrerer Kraftbegrenzungselemente 9 entsprechend den Patentansprüchen 3 bis 8 gezeigt.

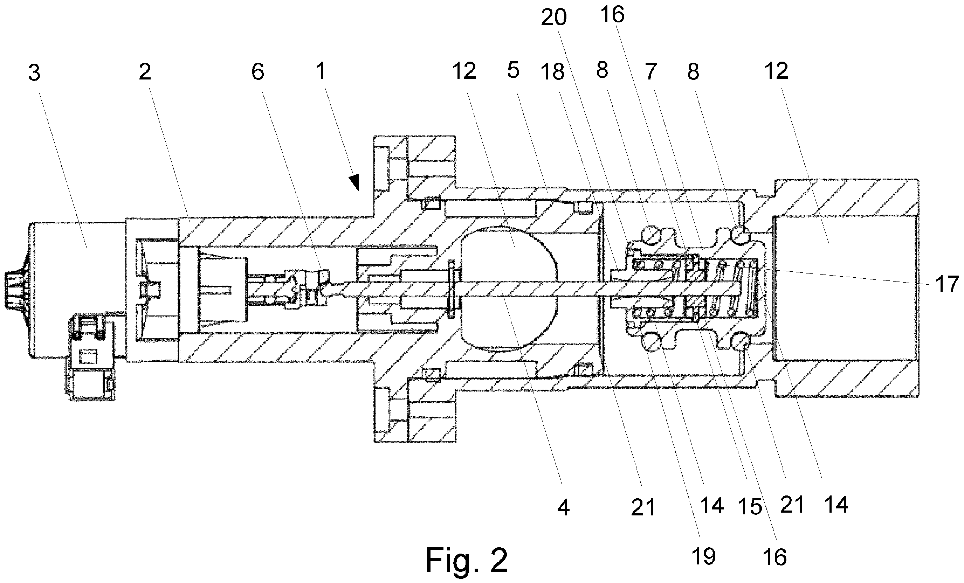

In der **Fig. 2** ist als eine Schnittdarstellung ein stilisiertes Wasserventil 1 mit der Anordnung des Kraftbegrenzungselementes 9 im Inneren des Ventilgrundkörpers 7 gezeigt. Die Zuflussöffnung 11, welche sich im Bereich zwischen den Dichtflächen/Dichtkanten 21 befindet, ist in dieser Figur 2 nicht gezeichnet. Dabei ist im Ventilgrundkörper 7 ein zylinderförmiger Hohlraum ausgebildet. Dieser Hohlraum kann gegebenenfalls abgedichtet ausgebildet werden, indem ein einfacher Nullring unter einem Verschlusselement angeordnet ist. Die Ventilstellstange 4 ist bis in diesen Hohlraum geführt. Auf dieser ist im Bereich des zylindrischen Hohlraums ein Wellendoppelflansch 15 fest verbunden. Auf den beiden Flanschflächen dieses Wellendoppelflansches 15 sind links und rechts zwei Dämpfungsringe 16 geführt, welche zugleich als Federstützringe für die Schraubenfedern 14 dienen und gegen die zwei innen im Hohlraum angeordnete Schraubenfedern 14 je nach Ventilkörperstellung gegen wirken. Wird der Ventilgrundkörper 7 mit den darauf befestigten Dichtkörpern 8 in Richtung der rechten Dichtfläche/Dichtkante 21 durch den Linearschrittmotor 3 verfahren und der rechte Dichtkörper 8 läuft gegen die rechte Dichtkante/Dichtfläche 21 des Ventilkörpers 5. Erreicht der Linearschrittmotor seine Kraftgrenze erfolgt durch den Linearschrittmotor 3 bedingt, ein unkontrolliertes Hin- und Herspringen des Rotors in nicht definierbaren Schrittmustern. Da aber nach Anfahren an die Dichtfläche/Dichtkante 21 die rechte Schraubenfeder 14 gegen die Innenfläche im Hohlraum des Dichtgrundkörpers 7 gedrückt wird, wird diese Schraubenfeder 14 mittels des Wellendoppelflansches 18 und dem darauf festgelegten Dämpfungsring 16 zusammengedrückt und übt eine definierte Andruckkraft auf den Dichtkörpers 8. Das bedeutet, dass ein mögliches Rückspringen des Rotors zwar nicht verhindert wird, aber diese axial oszillierende Bewegung wird nicht auf den Dichtkörper 8 übertragen, sondern dieser wird durch die erzeugte Vorspannung gegen die Dichtkante/Dichtfläche 21 gedrückt. Im Ergebnis erfolgt ein für die Dichtigkeit ausreichendes gleichbleibendes Anpressen des rechten Dichtkörpers 8 an die rechte Dichtfläche/Dichtkante 21. Zudem entstehen dabei keine unerwünschten Geräusche in diesem Bereich. Die schwimmende Lagerung der Dichtkörper 8 und des gesamten Ventilgrundkörpers 7 wird dadurch realisiert, dass die Ventilstangenbuchse 18, in der die Ventilstange 4 gleitend gelagert ist, innen im Querschnitt betrachtet ballig ausgebildet ist, d. h. der Durchmesser der Durchführung für die Ventilstellstange 4 verjüngt sich zur Mitte dieses Bauteils hin betrachtet und erweitert sich dann wieder. Dadurch wird ein durchaus möglicher, nicht genau zentrischer sich außerhalb der Symmetrieachse ausbildender Dichtvorgang problemlos ausgeglichen, d. h. die Ventilstellstange 4 kann eine abweichende, leicht schräge Lage gegenüber der Symmetrieachse einnehmen. Das bedeutet, dass z. B. ein strömungsbedingtes geringes Auslenken aus der optimalen, genau zentrischen Lage der Dichtköper 8 bzw. des Dichtgrundkörpers 7 keine Dichtigkeitsprobleme verursachen kann. Der Dichtkörper 8 dichtet also auch optimal in nicht genau mittiger Stellung gegenüber der Dichtfläche/Dichtkante 21. Die beiden Schraubenfedern 14 sind so dimensioniert, dass sie beim Einbau mittels der verriegelbaren Ventilstangenbuchse 18 zusammengedrückt werden, so dass diese eine definierte Vorspannung im eingebauten Zustand besitzen. Die Ventilstangenbuchse 18 wird im Ventilgrundkörper 7 mittels einer geeigneten Verdrehsicherung oder durch einen Bajonettverschluss auf dem Ventilstangenbuchsenbund 19 angeordneten Erhebungen in ihrer Lage festgelegt. Der Führungsring 17 wirkt als Endanschlag, wenn die Ventilstellstange 4 in Richtung der axialen Abflussöffnung 12 gefahren wird. Als linksseitiger Endanschlag wirkt die innere Fläche der Ventilstangenbuchse 18 (nicht bezeichnet), wenn die Ventilstellstange 4 in der Richtung zur radial angeordneten Abflussöffnung 12 gefahren wird.

Soll das Wasserventil 1 umgeschalten werden, wird der Ventilgrundköper 7 durch den Linearschrittmotor 3 nach links bewegt, bis der linke Dichtkörper 8 gegen die linke Dichtfläche/Dichtkante 21 läuft. Dann wird die linke Schraubenfeder 9 bedingt durch den auf der Ventilstellstange 4 fest angeordneten Wellendoppelflansch 15 und den anderen Dämpfungsring 16 gegen die Innenfläche des Ventilstangenbuchsenbundes 19 gedrückt, so das auf den linken Dichtkörper 8 ebenfalls eine ausreichend hohe Anpresskraft ausgeübt werden kann. Die Wirkung ist die gleiche, wie bereits vorstehend für die rechte Stellung des Ventilgrundkörpers 7 beschrieben.

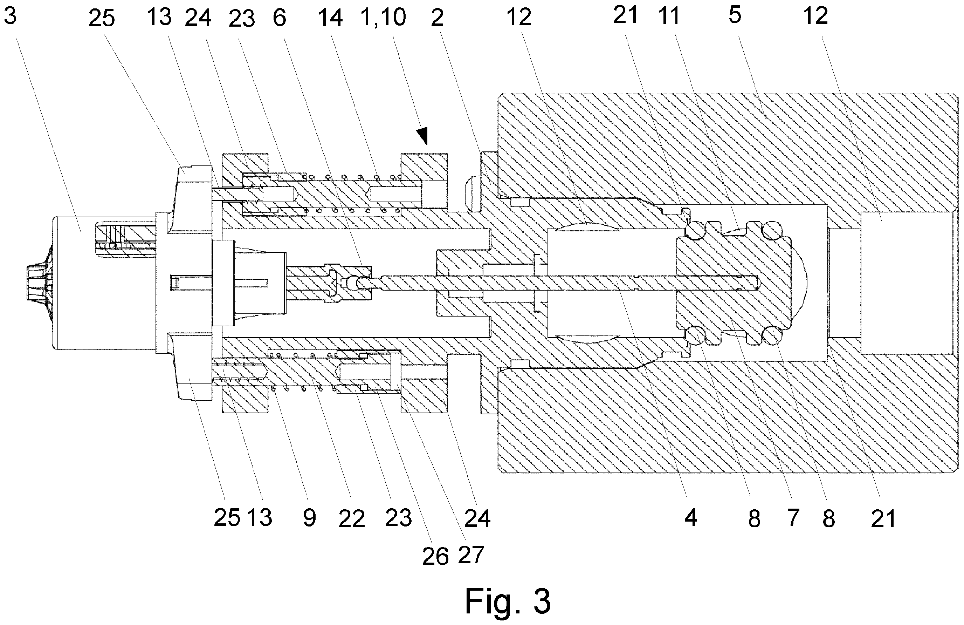

In der **Fig. 3** ist die Anordnung mehrerer Kraftbegrenzungselemente 9 zwischen Linearschrittmotor 3 und Kartusche 2 mit vier radial verteilt angeordneten Gleitstiften 22, welche in Gleitbuchsen 23, die an Kartuschenflanschen/Kartuschenausformungen 24 geführt und befestig sind, gezeigt. Die Gleitstifte 22 sind mit einem Linearschrittmotorflansch/Linearschrittmotorausformungen 25 fest verbunden, hier in diesem Ausführungsbeispiel sind sie mittels Motorflanschschrauben 13 verschraubt. Dabei sind als Kraftbegrenzungselemente 9 vier die Gleitbuchsen 23 umhüllende Schraubenfedern 14 vorgespannt so angeordnet, dass jeweils zwei in der linken Schließstellung und jeweils zwei in der rechten Schließstellung ihre Wirkung entfalten. Die schwimmende Lagerung der Ventilstange 4 im Inneren des Ventilgrundkörpers 7 ist hier nicht gezeichnet. In der linken Schließstellung liegt der linke Dichtkörper 8 an der linken Dichtfläche/Dichtkante 21 des Ventilkörpers 5 an, so dass das Wasser, welches durch die Zuflussöffnung 11 in das Innere des Ventilkörpers 5 strömt, nach rechts aus der rechten axialen Abflussöffnung 12 ausfließen kann. Läuft der Dichtkörper 8 gegen die linke Dichtfläche/Dichtkante 21 an, kommt es zu einem unkontrollierten Hin- und Herspringen des Rotors in nicht definierbare Schrittmuster. Durch die Vorspannung und durch die Bewegung des Gleitstiftes 22 nach rechts, erhöht sich durch das Zusammendrücken der oberen Schraubenfeder 14 die Anpresskraft auf den linken Dichtkörper 8.

Die Ventilstellstange 4 ist durch eine dichtende Durchführung über der Koppelstelle 6 in Inneren der Kartusche 2 mit dem Linearschrittmotor 3 verbunden. Durch die gefedert gleitend gelagerten Gleitstifte 22 kann der Linearschrittmotor 3 axial oszillierende Bewegungen ausführen, wenn die Dichtkörper 8 gegen die Dichtflächen/Dichtkanten 21 auflaufen.

In der Fig. 3 zeigt die untere Darstellung des Gleitstiftes 22 die Konstruktion und Wirkungsweise für den Linksanschlag der Dichtkörper 8. Dieser Gleitstift 22 ist mit dem Linearschrittmotorflansch/ bzw. einer Linearschrittmotorausformung 25 verschraubt. Beim Anfahren des Dichtkörpers 8 gegen den Linksanschlag gerät der Linearschrittmotor 3 in ein unkontrolliertes Hin- und Herspringen des Rotors, d.h. in nicht definierbare Schrittmuster. Bei einer Bewegung des Linearschrittmotors 3 nach rechts zur Kartusche 2 hin, bewegen sich die Gleitstifte 22 nach rechts. Der obere Gleitstift 22 gleitet dabei zunächst in der oberen Gleitbuchse 23 nach rechts, läuft an und nimmt diese mit und drückt damit das obere Federelement 9 zusammen. Durch die aufeinander abgestimmte Dimensionierung der Federn 9, der Gleitstiftabsätze 26 und der Länge der Gleitbuchsenbohrung in der Gleitbuchse 23 wird die aufzubringende Motorkraft definiert begrenzt.

### Vorschlag zur Bezugszeichenliste

- 1: Wasserventil
- 2: Kartusche
- 3: Linearschrittmotor
- 4: Ventilstellstange
- 5: Ventilkörper
- 6: Koppelelement
- 7: Ventilgrundkörper
- 8: Dichtkörper
- 9: Kraftbegrenzungselement, Federelement
- 10: Dreiwegewasserventil
- 11: Zuflussöffnung
- 12: Abflussöffnung
- 13: Motorflanschschraube
- 14: Schraubenfeder
- 15: Wellendoppelflansch
- 16: Dämpfungsring
- 17: Führungsring
- 18: Ventilstangenbuchse
- 19: Ventilstangenbuchsenbund
- 20: Bajonettverschluss
- 21: Dichtfläche/Dichtkanten
- 22: Gleitstifte
- 23: Gleitbuchsen
- 24: Kartuschenflansch/Kartuschenausformung
- 25: Linearschrittmotorflansch/Linearschrittmotorausformung
- 26: Gleitbuchsenabsatz
- 27: Gleitbuchsenbohrung

## Patentansprüche

1. Dichtsystem für umschaltbare fluiddurchströmte Wasserventile (1) mit einem an einer Kartusche (2) angeordneten Antrieb mittels eines Linearmotors und einem in einem Ventilkörper (5) zwischen Dichtflächen/Dichtkanten (21) angeordneten Ventilgrundkörper (7),
mit einem oder mehreren auf diesem angeordneten Dichtkörper(n) (8) und Verstellung über eine Ventilstellstange (4),
wobei die Dichtflächen/Dichtkanten (21) des Ventils den/die Dichtkörper (8) in geschlossenem Zustand umschließen
**dadurch gekennzeichnet,**
**dass** innerhalb der Kraftübertragungsstrecke ein oder mehrere Kraftbegrenzungselement(e) (9) mit definierter Feder- und/oder Dämpfungswirkung angeordnet und der/die Dichtkörper (8) schwimmend gelagert ist/sind.

2. Dichtsystem für umschaltbare fluiddurchströmte Wasserventile (1) nach Anspruch 1,
**dadurch gekennzeichnet,**
**dass** das/die Kraftbegrenzungselement(e) (9) beidseitig wirkend ausgebildet sind.

3. Dichtsystem für umschaltbare fluiddurchströmte Wasserventile (1) nach Anspruch 1 oder 2,
**dadurch gekennzeichnet,**
**dass** das/die Kraftbegrenzungselement(e) (9) vorgespannt ausgebildet ist/sind.

4. Dichtsystem für umschaltbare fluiddurchströmte Wasserventile (1) nach Anspruch 1,
**dadurch gekennzeichnet,**
**dass** das/die Kraftbegrenzungselement(e) (9) zwischen Kartusche (2) und Linearschrittmotor (3) angeordnet ist/sind.

5. Dichtsystem für umschaltbare fluiddurchströmte Wasserventile (1) nach Anspruch 1
**dadurch gekennzeichnet,**
**dass** das/die Kraftbegrenzungselement(e) (9) zwischen Linearschrittmotor (3) und der Ventilstellstange (4) in oder an einem Koppelelement (6) und angeordnet ist/sind.

6. Dichtsystem für umschaltbare fluiddurchströmte Wasserventile (1) nach Anspruch 1,
**dadurch gekennzeichnet,**
**dass** das/die Kraftbegrenzungselement(e) (9) zwischen Kartusche (2) und Ventilkörper (5) angeordnet ist/sind.

7. Dichtsystem für umschaltbare fluiddurchströmte Wasserventile (1) nach Anspruch 1,
**dadurch gekennzeichnet,**
**dass** das/die Kraftbegrenzungselement(e) (9) in die Ventilstellstange (4) integriert ist/sind.

8. Dichtsystem für umschaltbare fluiddurchströmte Wasserventile (1) nach Anspruch 1,
**dadurch gekennzeichnet,**
**dass** das/die Kraftbegrenzungselement(e) (9) am Ventilgrundkörper (7) angeordnet ist/sind.

9. Dichtsystem für umschaltbare fluiddurchströmte Wasserventile (1) nach Anspruch 1,
**dadurch gekennzeichnet,**
**dass** das/die Kraftbegrenzungselement(e) (9) im Ventilgrundkörper (7) angeordnet ist/sind.

10. Dichtsystem für umschaltbare fluiddurchströmte Wasserventile (1) nach einem der vorstehenden Ansprüche,
**dadurch gekennzeichnet,**
**dass** das/die Kraftbegrenzungselement(e) (9) konstruktiv als ein oder mehrere separate(s) Bauteil(e) ausgebildet ist/sind.

11. Dichtsystem für umschaltbare fluiddurchströmte Wasserventile (1) nach Anspruch 1,
**dadurch gekennzeichnet,**
**dass** das/die Kraftbegrenzungselement(e) (9) konstruktiv als Schraubenfeder(n) (14), als Blattfeder(n), als ein Teil aus Elastomerwerkstoffen oder aus einem Kunstwerkstoff mit beidseitig federnden Eigenschaften ausgebildet ist.
